# EUROPÄISCHE PATENTSCHRIFT

(11) **EP 2 882 060 B1**
(45) Veröffentlichungstag und Bekanntmachung des Hinweises auf die Patenterteilung: **25.07.2018**
(21) Anmeldenummer: 14194976.8
(22) Anmeldetag: 26.11.2014
(51) Int. Cl.: H02J 3/14, B65G 1/00, G06Q 10/08, H02J 4/00, H02J 1/14, H02J 3/00

(54) **Verfahren zum Steuern einer elektrisch angetriebenen Förderanlage**
Method for controlling an electrically powered conveyor
Dispositif de commande d'une installation de transport électrique

(30) Priorität: 05.12.2013 DE 102013225026
(43) Veröffentlichungstag der Anmeldung: 10.06.2015
(73) Patentinhaber: viastore systems GmbH, 70469 Stuttgart (DE)
(72) Erfinder: Hahn-Woernle, Paul, 70192 Stuttgart (DE)
(74) Vertreter: Patentanwälte Ruff, Wilhelm, Beier, Dauster & Partner mbB

(56) Entgegenhaltungen:
- EP-A1- 2 207 135
- US-A1- 2012 124 401

## Beschreibung

Die Erfindung betrifft ein Verfahren zum Steuern einer elektrisch angetriebenen Förderanlage.

Bei elektrisch angetriebenen Förderanlagen, beispielsweise Hochregallager mit mehreren Regalbediengeräten, rücken die Betriebskosten durch die steigenden Energiepreise in den Fokus der Betreiber solcher Förderanlagen. Auch ist die elektrische Ausrüstung solcher Förderanlagen, beispielsweise Transformatoren, in der Regel so dimensioniert, dass diese nur zu einem geringen Prozentsatz von teilweise sogar weniger als 50% ausgelastet sind. Die elektrische Ausstattung wird so dimensioniert, dass die maximal benötigten Leistungen mit einem Gleichzeitigkeitsfaktor multipliziert und dann aufsummiert werden. Der Gleichzeitigkeitsfaktor ist kleiner 1 und berücksichtigt die Wahrscheinlichkeit, wie viele elektrische Ausstattungen, beispielsweise Antriebe, ihre maximale Leistung zum gleichen Zeitpunkt benötigen. Der Gleichzeitigkeitsfaktor wird immer so gewählt, dass eine hohe Sicherheit besteht, dass also äußerst unwahrscheinlich ist, dass die maximal benötigte Leistung, für die die elektrische Ausstattung der Förderanlage ausgelegt ist, überschritten wird. Dies führt aber in der Regel zu einer Überdimensionierung der elektrischen Ausstattung.

Elektrische Energie wird von den Energieversorgungsunternehmen über einen Arbeitspreis und einen Leistungspreis abgerechnet. Der Arbeitspreis wird aus der in einem Zeitraum aufgenommenen elektrischen Arbeit in Kilowattstunden berechnet. Der Leistungspreis berechnet sich aus dem Mittelwert der drei höchsten ¼ h-Mittelwerte in Kilowatt. Der ¼ h-Mittelwert ist die durchschnittlich benötigte Leistung in einer Viertelstunde. Je nachdem, welche elektrischen Leistungen benötigt werden, können sich auch bei gleicher aufgenommener Arbeit deutliche Unterschiede bei den Kosten für die Versorgung mit elektrischer Energie ergeben.

Die europäische Offenlegungsschrift EP 2 207 135 A1 betrifft ein Verfahren zum Steuern einer elektrisch angetriebenen Förderanlage, wobei die Förderanlage eine Steuerung zum Verarbeiten von Beförderungsaufträgen und zum Erzeugen von Beförderungsbefehlen zum Ausführen der Beförderungsaufträge aufweist. Es ist beschrieben, durch eine Reduzierung der Dynamikwerte beim Beschleunigen von Regalbediengeräten eine Energieeinsparung zu erreichen.

Aus der US-Offenlegungsschrift US 2012/0124401 A1 ist ein Verfahren zum Steuern mehrerer, miteinander vernetzter Haushaltsgeräte bekannt, bspw. Waschmaschine, Trockner und Kühlschränke. Eine zentrale Steuereinheit kann eine Gesamtleistungsaufnahme aller elektrischen Haushaltsgeräte zusammen abschätzen und kann den Betrieb eines elektrischen Haushaltsgeräts, bzw. das Einschalten eines Spitzenverbrauchers in einem solchen Haushaltsgerät, verzögern, um dadurch zu erreichen, dass ein vordefinierter Grenzwert für eine elektrische Gesamtleistungsaufnahme nicht überschritten wird. Mit der Erfindung soll ein Verfahren zum Steuern einer elektrisch angetriebenen Förderanlage angegeben werden, das einen kostengünstigen Betrieb der Förderanlage ermöglicht.

Erfindungsgemäß ist hierzu ein Verfahren zum Steuern einer elektrisch angetriebenen Förderanlage mit den Merkmalen von Anspruch 1 vorgesehen. Vorteilhafte Weiterbildungen der Erfindung ergeben sich aus den Unteransprüchen.

Erfindungsgemäß ist also ein Verfahren zum Steuern einer elektrisch angetriebenen Förderanlage vorgesehen, wobei die Förderanlage eine Steuerung zum Verarbeiten von Beförderungsaufträgen und zum Erzeugen von Beförderungsbefehlen zum Ausführen der Beförderungsaufträge aufweist, mit folgenden Schritten:
- Prognostizieren einer elektrischen Leistungsaufnahme der Förderanlage für das Ausführen eines Beförderungsauftrags mittels Berechnen einer dem Beförderungsauftrag zugeordneten Fahrkurve und eines der Fahrkurve zugeordneten Verlaufs der Leistungsaufnahme,
- Prüfen, ob eine prognostizierte elektrische Gesamtleistungsaufnahme der Förderanlage beim Ausführen des Beförderungsauftrags einen vordefinierten Grenzwert überschreitet,
- in Abhängigkeit des Prüfungsergebnisses, Freigeben oder Verzögern eines dem Beförderungsauftrag zugeordneten Beförderungsbefehls.

Indem gemäß der Erfindung zunächst eine elektrische Leistungsaufnahme der Förderanlage für das Ausführen eines speziellen Beförderungsauftrags prognostiziert wird, dann geprüft wird, ob eine prognostizierte elektrische Gesamtleistungsaufnahme der Förderanlage, also die prognostizierte elektrische Leistungsaufnahme für das Ausführen eines speziellen Beförderungsauftrags sowie die - bereits prognostizierte oder bekannte - Leistungsaufnahme der Förderanlage ohne das Ausführen des speziellen Beförderungsauftrags, beim Ausführen des speziellen Beförderungsauftrags einen vordefinierten Grenzwert überschreitet und schließlich in Abhängigkeit des Prüfungsergebnisses ein dem speziellen Beförderungsauftrag zugeordneter Beförderungsbefehl entweder freigegeben oder verzögert wird, kann die Einhaltung eines vordefinierten Grenzwerts der Leistungsaufnahme nicht nur überwacht, sondern auch eingehalten werden. Damit wird vermieden, dass kurzfristige Leistungsspitzen auftreten, die erhebliche Mehrkosten verursachen. Darüber hinaus wird es durch die erfindungsgemäße Vermeidung von Leistungsspitzen möglich, die elektrische Ausstattung einer Förderanlage präziser auf die tatsächlich zu erwartende Spitzenbelastung auszulegen. Die elektrische Ausstattung der Förderanlage kann dadurch weniger leistungsstark und somit kostengünstiger gewählt werden.

In Weiterbildung der Erfindung erfolgt das Prognostizieren der elektrischen Leistungsaufnahme und das Prüfen, ob eine prognostizierte elektrische Gesamtleistungsaufnahme einen vordefinierten Grenzwert überschreitet, für einen vordefinierten Zeitraum. Vorteilhafterweise beträgt der vordefinierte Zeitraum 15 Minuten.

Dadurch kann das erfindungsgemäße Verfahren auf die bei Energieversorgern übliche Abrechnungspraxis abgestellt und dadurch optimiert werden.

In Weiterbildung der Erfindung erfolgt das Freigeben eines Beförderungsbefehls so, dass der Beförderungsauftrag innerhalb des vordefinierten Zeitraums ausgeführt wird und das Verzögerung des Beförderungsbefehls erfolgt so, dass der Beförderungsauftrag innerhalb des vordefinierten Zeitraums verschoben oder außerhalb des vordefinierten Zeitraums ausgeführt wird.

Auf diese Weise können Leistungsspitzen innerhalb des vordefinierten Zeitraums verhindert werden und, beispielsweise dann, wenn der vordefinierte Zeitraum 15 Minuten beträgt, kann das Verfahren eine deutliche Kostenreduzierung bei der üblichen Abrechnung der Energieversorger bezogen auf einen 15-Minuten-Zeitraum bewirken.

In Weiterbildung der Erfindung erfolgt das Prognostizieren der elektrischen Leistungsaufnahme mehrerer Beförderungsaufträge und das Sortieren der Beförderungsaufträge so, dass ein vordefinierter Grenzwert der elektrischen Gesamtleistungsaufnahme der Förderanlage nicht überschritten wird. Zweckmäßigerweise erfolgt das Sortieren der Beförderungsaufträge in zeitlicher Hinsicht. Das Sortieren der Beförderungsaufträge kann aber beispielsweise auch im Hinblick auf einen Startort oder einen Zielort erfolgen, dass also beispielsweise die Beförderungsaufträge so sortiert werden, dass zunächst einmal Beförderungsaufträge auf einem ähnlichen Niveau ausgeführt werden, beispielsweise in den unteren Regalreihen und erst danach Beförderungsaufträge ausgeführt werden, die obere Regalreihen betreffen. Auch durch eine solche Sortierung können Leistungsspitzen innerhalb eines vordefinierten Zeitraums vermieden werden. Das Ziel einer Sortierung der Beförderungsaufträge ist eine möglichst konstante Gesamtleistungsaufnahme.

In Weiterbildung der Erfindung wird ein Beförderungsbefehl, der einem Beförderungsauftrag zugeordnet ist, verändert, wobei die Veränderung hinsichtlich einer Geschwindigkeit der Beförderung, einer Beschleunigung, einer Bremsbeschleunigung und/oder einer Aufteilung in einzelne Beförderungsabschnitte erfolgt.

Beispielsweise kann ein Beförderungsbefehl so verändert werden, dass eine Geschwindigkeit oder eine Beschleunigung herabgesetzt werden, um Leistungsspitzen innerhalb eines vordefinierten Zeitraums zu vermeiden. Beispielsweise kann aber auch eine Bremsbeschleunigung heraufgesetzt werden, um innerhalb eines vordefinierten Zeitraums eine größere Energierückspeisung zu ermöglichen und um dadurch Leistungsspitzen bei der Leistungsaufnahme zu vermeiden. Eine Aufteilung in einzelne Beförderungsabschnitte kann beispielsweise dadurch erfolgen, dass innerhalb eines ersten vordefinierten Zeitraums ein erster Beförderungsabschnitt ausgeführt wird, der lediglich eine geringe Leistungsaufnahme erfordert. In einen zweiten vordefinierten Zeitraum wird dann ein Beförderungsabschnitt verschoben, der eine hohe Leistungsaufnahme erfordert. Auch auf diese Weise können dann Leistungsspitzen innerhalb der vordefinierten Zeiträume vermieden werden.

In Weiterbildung der Erfindung erfolgt das Verändern des Beförderungsbefehls nach dem Prüfen der prognostizierten elektrischen Gesamtleistungsaufnahme und nach dem Verändern des Beförderungsbefehls erfolgt eine erneute Prüfung der prognostizierten elektrischen Gesamtleistungsaufnahme.

Auf diese Weise kann die Auswirkung der Veränderung des Beförderungsbefehls geprüft werden, ob dadurch ein vordefinierter Grenzwert der Gesamtleistungsaufnahme der Förderanlage überschritten wird.

In Weiterbildung der Erfindung werden sämtliche Beförderungsbefehle für die Förderanlage mittels der Steuerung freigegeben oder verzögert.

Die Steuerung muss somit sämtliche Beförderungsbefehle freigeben oder verzögern. Dadurch wird eine zuverlässige Überwachung und Kontrolle der elektrischen Gesamtleistungsaufnahme möglich.

In Weiterbildung der Erfindung werden Randbedingungen berücksichtigt, wie eine verfügbare elektrische Leistung in einem jeweiligen Zeitraum, eine elektrische Leistungsaufnahme weiterer elektrischer Geräte im Umfeld der Förderanlage und/oder eine Priorisierung von Beförderungsaufträgen.

In Weiterbildung der Erfindung erfolgt eine Prognose der elektrischen Gesamtleistungsaufnahme unter Berücksichtigung bereits freigegebener Beförderungsbefehle. Zweckmäßigerweise erfolgt nach Freigabe eines Beförderungsbefehls eine Aktualisierung der Prognose der elektrischen Gesamtleistungsaufnahme.

Mit jeder Freigabe eines Beförderungsbefehls wird somit die Prognose der elektrischen Gesamtleistungsaufnahme aktualisiert, so dass für die Prüfung, ob eine prognostizierte elektrische Gesamtleistungsaufnahme der Förderanlage beim Ausführen des Beförderungsauftrags einen vordefinierten Grenzwert überschreitet, immer eine aktuelle prognostizierte Gesamtleistungsaufnahme zur Verfügung steht. Die Vorhersage der elektrischen Gesamtleistungsaufnahme kann dadurch sehr genau erfolgen.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. In den verschiedenen Zeichnungen dargestellte und in der Beschreibung erläuterte Einzelmerkmale können dabei in beliebiger Weise miteinander kombiniert werden, ohne den Rahmen der Erfindung zu überschreiten. In den Zeichnungen zeigen:
- Fig. 1: eine schematische Darstellung einer elektrischen Förderanlage zur Durchführung des erfindungsgemäßen Verfahrens,
- Fig. 2: eine schematische Darstellung der elektrischen Ausrüstung der Förderanlage der Fig. 1,
- Fig. 3: ein Ablaufdiagramm zur Verdeutlichung des erfindungsgemäßen Verfahrens,
- Fig. 4: einen beispielhaften Verlauf einer Leistungsaufnahme eines ersten Förderelements und
- Fig. 5: einen beispielhaften Verlauf einer Leistungsaufnahme eines zweiten Förderelements.

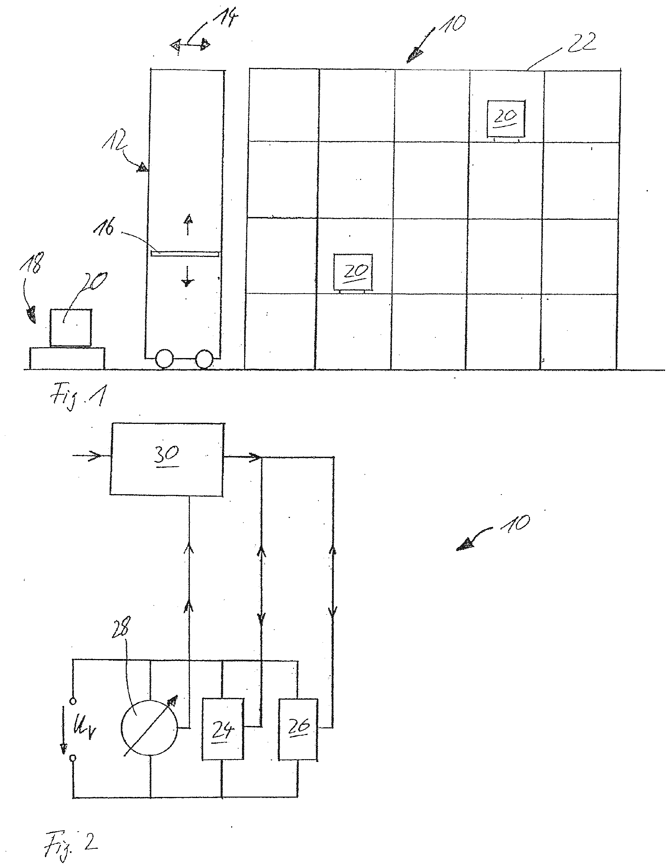

Die Darstellung der Fig. 1 zeigt schematisch eine elektrische Förderanlage 10, die ein Regalbediengerät 12 aufweist, das sowohl horizontal in den Richtungen des Doppelpfeiles 14 verfahrbar ist als auch eine Hubplattform 16 aufweist, die nach oben und unten verfahren werden kann. Mit Hilfe des Regalbediengeräts 12 wird Lagergut 20 von einem Übergabeplatz 18 aufgenommen. Auf dem Übergabeplatz 18 ist in Fig. 1 nur ein Lagergut 20 dargestellt. Das Lagergut 20 kann dann von dem Übergabeplatz 18 aus an einen beliebigen freien Lagerplatz im Regal 22 transportiert werden. In dem Regal 22 sind an lediglich zwei Positionen Lagergüter 20 dargestellt. Umgekehrt kann mit dem Regalbediengerät 12 Lagergut 20 aus dem Regal 22 entnommen werden und an den Übergabeplatz 18 transportiert werden. Selbstverständlich können mehrere Übergabeplätze 18 vorhanden sein, beispielsweise ein Übergabeplatz für einzulagerndes Lagergut 20 und ein weiterer Übergabeplatz für auszulagerndes Lagergut 20.

Die Darstellung der Fig. 2 zeigt in stark vereinfachter, schematischer Darstellung die elektrische Ausrüstung der Förderanlage 10 der Fig. 1. Die Förderanlage 10 weist mehrere elektrische Verbraucher 24, 26 auf, beispielsweise elektrische Antriebe für das Regalbediengerät 12. Die elektrischen Verbraucher 24, 26 sind mit einem elektrischen Netz mit der Versorgungsspannung Uv verbunden. Dieses Netz kann beispielsweise das öffentliche Energienetz sein. Ein Messgerät 28 ist vorgesehen, um eine elektrische Gesamtleistungsaufnahme der Förderanlage 10 zu messen und das Messergebnis an eine Steuerung 30 der Förderanlage 10 zu übermitteln.

Die Steuerung 30 erhält, beispielsweise von einem Leitrechner, Beförderungsaufträge, also beispielsweise den Auftrag, Lagergut 20 vom Übergabeplatz 18 in einen bestimmten Regalplatz einzulagern. Weitere Beförderungsaufträge können das Auslagern von Lagergut 20 aus dem Regal oder das Umlagern von Lagergut 20 innerhalb des Regals 20 umfassen. Die Steuerung 30 erzeugt Beförderungsbefehle, die dann an die elektrischen Antriebe 24, 26 ausgegeben werden. Sämtliche Beförderungsbefehle für die elektrischen Antriebe 24, 26 werden von der Steuerung 30 ausgegeben.

Die Steuerung 30 ist dafür vorgesehen, die maximalen ¼ h-Mittelwerte der Leistungsaufnahme aus dem Netz durch die Förderanlage 10 zu begrenzen und eine möglichst konstante elektrische Leistungsaufnahme der Förderanlage 10 aus dem Netz sicherzustellen. Hierzu stehen der Steuerung 30 Grenzwerte für die elektrische Leistungsaufnahme zur Verfügung. Diese Grenzwerte können beispielsweise für unterschiedliche Tageszeiten unterschiedliche Werte annehmen, im einfachsten Fall existiert lediglich ein einziger Grenzwert für die elektrische Leistungsaufnahme.

Beförderungsaufträge für die Förderanlage 10 werden von der Steuerung 30 angenommen und die Steuerung 30 trifft eine Voraussage oder Prognose für die elektrische Leistungsaufnahme der Förderanlage 10, wenn der spezielle Beförderungsauftrag ausgeführt wird. Die Steuerung 30 prüft daraufhin, ob die elektrische Gesamtleistungsaufnahme der Förderanlage 10 beim Ausführen des gerade bearbeiteten Beförderungsauftrags den vordefinierten Grenzwert überschreitet. Hierzu steht der Steuerung 30 eine Prognose der elektrischen Gesamtleistungsaufnahme der Förderanlage 10 zur Verfügung, zu der dann im einfachsten Fall die prognostizierte elektrische Leistungsaufnahme für das Ausführen des gerade geprüften Beförderungsauftrags hinzuaddiert wird. Wenn die prognostizierte elektrische Gesamtleistungsaufnahme der Förderanlage beim Ausführen des gerade geprüften Beförderungsauftrags einen vordefinierten Grenzwert überschreitet, so wird ein diesem Beförderungsauftrag zugeordneter Beförderungsbefehl verzögert. Ergibt die Prüfung dahingegen, dass die prognostizierte elektrische Gesamtleistungsaufnahme der Förderanlage 10 beim Ausführen des gerade geprüften Beförderungsauftrags den vordefinierten Grenzwert nicht überschreitet, so wird der dem Beförderungsauftrag zugeordnete Beförderungsbefehl freigegeben und durch die Förderanlage 10 ausgeführt. Die Prognose der elektrischen Leistungsaufnahme der Förderanlage 10 für das Ausführen eines speziellen, abzuarbeitenden Beförderungsauftrags und auch die Prognose für die elektrische Gesamtleistungsaufnahme der Förderanlage erfolgt für einen vordefinierten Zeitraum, zweckmäßigerweise einen Zeitraum von 15 Minuten. Durch das Freigeben oder Verzögern von Beförderungsbefehlen kann mit der Steuerung 30 dadurch erreicht werden, dass Leistungsspitzen bei der elektrischen Leistungsaufnahme der Förderanlage 10 vermieden werden. Ziel ist es, eine möglichst konstante elektrische Leistungsaufnahme zu erreichen. Das Vermeiden von Leistungsspitzen sorgt für die Möglichkeit, die Energiekosten der Förderanlage 10 abzusenken, da ja die Energiekosten mit dem Auftreten von Leistungsspitzen innerhalb von Zeiträumen von 15 Minuten aufgrund des Abrechnungsmodus der Energieversorger erheblich ansteigen können.

Das Messgerät 28 stellt der Steuerung 30 einen aktuellen Messwert für die elektrische Gesamtleistungsaufnahme der Förderanlage 10 zur Verfügung. Dieser Messwert kann beispielsweise dazu verwendet werden, die Güte der prognostizierten elektrischen Gesamtleistungsaufnahme zu überprüfen und den Berechnungsalgorithmus für die Prognose gegebenenfalls anzupassen.

Die Steuerung 30 kann auch eine Sortierung von Beförderungsaufträgen vornehmen, um dadurch Leistungsspitzen bei der elektrischen Leistungsaufnahme der Förderanlage 10 zu vermeiden. Eine solche Sortierung kann in zeitlicher Hinsicht erfolgen, dass also beispielsweise leistungsintensive Beförderungsaufträge in zeitlicher Hinsicht so verteilt werden, dass Leistungsspitzen vermieden oder verringert werden. Eine solche Sortierung kann aber auch in räumlicher Hinsicht erfolgen, also dass beispielsweise Beförderungsaufträge, die einen leistungsintensiven großen Hub des Regalbediengeräts 12 erfordern, innerhalb unterschiedlicher vordefinierter Zeiträume angeordnet werden, um dadurch Leistungsspitzen zu vermeiden. Das Sortieren der Beförderungsaufträge kann selbstverständlich auch dazu dienen, Leerfahrten nach Möglichkeit zu vermeiden.

Die Steuerung 30 kann darüber hinaus Beförderungsaufträge verändern, immer mit dem Ziel eine n Grenzwert der elektrischen Leistungsaufnahme der Förderanlage 10 nicht zu überschreiten. Eine solche Veränderung eines einem Beförderungsauftrag zugeordneten Beförderungsbefehls kann beispielsweise hinsichtlich einer Geschwindigkeit der Beförderung, einer Beschleunigung während der Beförderung, einer Bremsbeschleunigung während der Beförderung und/oder einer Aufteilung der Beförderung in einzelne Beförderungsabschnitte erfolgen. Durch diese Maßnahmen können Leistungsspitzen bei der elektrischen Leistungsaufnahme vermieden werden.

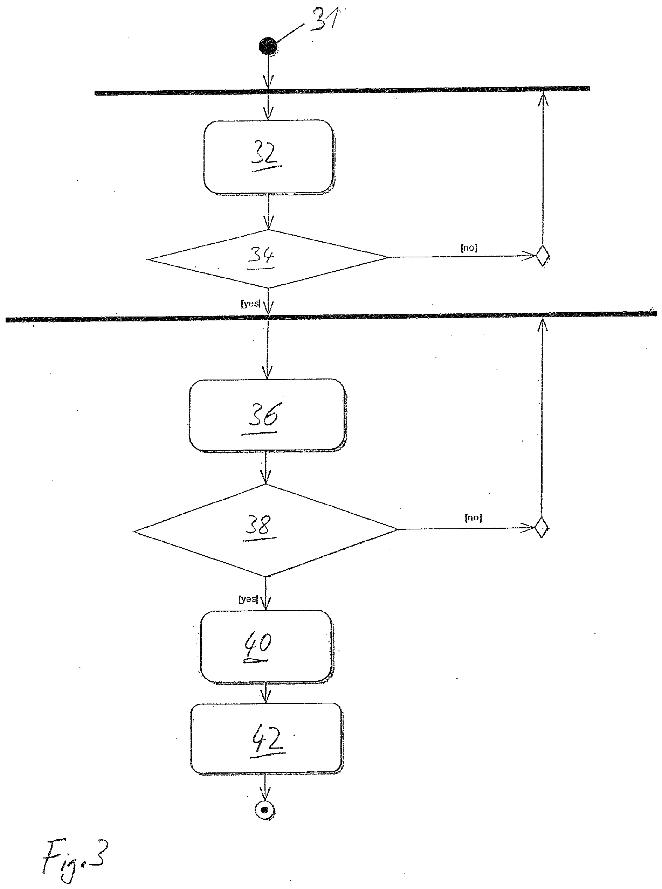

Die Darstellung der Fig. 3 zeigt ein Ablaufdiagramm zur Verdeutlichung des erfindungsgemäßen Verfahrens.

Am Punkt 31 erfolgt der Beginn eines Zyklus des Verfahrens, in dem die Steuerung 30 einen Beförderungsauftrag erhält und die Freigabe eines dem Beförderungsauftrag zugeordneten Beförderungsbefehls angefragt wird.

Im Schritt 32 wird eine dem Beförderungsauftrag zugeordnete Fahrkurve des Regalbediengeräts 12 berechnet und eine der Fahrkurve zugeordneter Verlauf der Leistungsaufnahme wird berechnet. Der Verlauf der Leistungs aufnahme entspricht dabei dem zeitlichen Verlauf der elektrischen Leistungsaufnahme der Antriebe 24, 26 des Regalbediengeräts 12 beim Durchlaufen der berechneten Fahrkurve. Die berechnete Leistungskurve ermöglicht es dadurch, die elektrische Leistungsaufnahme der Förderanlage 10 beim Abarbeiten eines speziellen Beförderungsauftrags zu berechnen. Bei der Berechnung der Leistungskurve wird das Gewicht des zu befördernden Lagergutes berücksichtigt. Anstelle der Fahrkurve des Regalbediengeräts 12 kann auch die Fahrkurve bzw. der Leistungsaufnahmeverlauf eines anderen Förderelements oder elektrischen Verbrauchers in der Förderanlage berechnet werden. Berücksichtigt werden können auch andere elektrische Verbraucher einer Intra-Logistikanlage bzw. deren Leistungsaufnahmeverlauf, beispielsweise Sprinkleranlagen, Brandschutzanlagen, Klimaanlagen und Sicherheitseinrichtungen.

Im Schritt 34 wird abgeprüft, ob für den angefragten Beförderungsauftrag die Leistungskurve und die Fahrkurve vorhanden sind. Ist dies nicht der Fall, kehrt das Verfahren zum Schritt 32 zurück und die Leistungskurve und/oder die Fahrkurve werden berechnet.

Liegen dahingegen die Leistungskurve und die Fahrkurve vor, so wird im nachfolgenden Schritt 36 die elektrische Leistungsaufnahme der Förderanlage 10 für das Ausführen des angefragten Beförderungsauftrags berechnet oder prognostiziert. Darüber hinaus wird im Schritt 36 die elektrische Gesamtleistungsaufnahme der Förderanlage 10 beim Ausführen des angefragten Beförderungsauftrags prognostiziert. Dies kann im einfachsten Fall dadurch erfolgen, dass die prognostizierte elektrische Leistungsaufnahme für das Ausführen des angefragten Beförderungsauftrags zu der bereits vorhandenen Prognose der Leistungsaufnahme der Förderanlage 10 hinzuaddiert wird. Die Prognose der elektrischen Gesamtleistungsaufnahme der Förderanlage erfolgt dabei anhand bereits freigegebener Beförderungsbefehle. Im einfachsten Fall ist die prognostizierte elektrische Gesamtleistungsaufnahme also die Summe mehrerer prognostizierter Leistungsaufnahmen für das Ausführen spezieller Beförderungsaufträge.

Im Schritt 38 erfolgt dann noch die Prüfung, ob die prognostizierte elektrische Gesamtleistungsaufnahme der Förderanlage 10 dann, wenn der angefragte Beförderungsauftrag ausgeführt wird, einen vordefinierten Grenzwert überschreitet. Mit anderen Worten wird geprüft, ob ein dem angefragten Beförderungsauftrag zugeordneter Beförderungsbefehl freigegeben werden kann und ob ein vordefinierter Grenzwert für die elektrische Gesamtleistungsaufnahme der Förderanlage 10 eingehalten wird.

Wird der Grenzwert eingehalten, wird ein dem angefragten Beförderungsauftrag zugeordneter Beförderungsbefehl freigegeben. Wird der vordefinierte Grenzwert nicht eingehalten, wird der dem angefragten Beförderungsauftrag zugeordnete Beförderungsbefehl nicht freigegeben und damit verzögert. Alternativ oder zusätzlich zu einer Verzögerung kann dann auch eine in Fig. 3 nicht dargestellte Veränderung des Beförderungsbefehls erfolgen, beispielsweise die Aufteilung eines Beförderungsauftrags in mehrere Beförderungsabschnitte, die Absenkung einer Geschwindigkeit der Beförderung oder eine Beschleunigung der Beförderung oder beispielsweise auch die Veränderung einer Bremsbeschleunigung beim Ausführen des Beförderungsauftrags.

In dem nachfolgenden Schritt 40, also nach der Freigabe eines dem angefragten Beförderungsauftrag zugeordneten Beförderungsbefehls, wird die Voraussage oder Prognose der elektrischen Gesamtleistungsaufnahme der Förderanlage 10 aktualisiert, indem die prognostizierte Leistungsaufnahme für das Ausführen des angefragten Beförderungsauftrags zu der bereits vorhandenen Prognose hinzugefügt, im einfachsten Fall hinzuaddiert wird. Diese aktualisierte Prognose für die elektrische Gesamtleistungsaufnahme der Förderanlage 10 steht der Steuerung 30 dann bei der Abarbeitung des nächsten Beförderungsauftrags im Schritt 36 zur Verfügung.

Im Schritt 42 werden dann die Beförderungsbefehle an die elektrischen Antriebe 24, 26 übergeben, so dass diese Beförderungsbefehle dann ausgeführt werden können. Die Steuerung 30 wird dann wieder freigegeben, um den nächsten Beförderungsauftrag, beginnend am Punkt 31, abarbeiten zu können.

Der anhand der Fig. 3 beschriebene Ablauf erfolgt vorzugsweise programmgesteuert innerhalb eines geeigneten Rechners in der Steuerung 30. Die Prognose der Leistungsaufnahme für das Ausführen eines angefragten Beförderungsauftrags sowie auch die Prognose für die elektrische Gesamtleistungsaufnahme der Förderanlage 10 erfolgt dabei jeweils für einen vordefinierten Zeitraum von 15 Minuten. Dadurch kann die Steuerung 30 sicherstellen, dass ein vordefinierter Grenzwert für die elektrische Gesamtleistungsaufnahme der Förderanlage 10 innerhalb eines jeweiligen Zeitraums von 15 Minuten einen vordefinierten Grenzwert nicht überschreitet.

Mit dem erfindungsgemäßen Verfahren ist somit ein kostengünstiges Betreiben einer elektrischen Förderanlage 10 möglich. Es ist dabei selbstverständlich, dass anstelle des in Fig. 1 dargestellten Regallagers auch anders geartete elektrische Förderanlagen in derselben erfindungsgemäßen Art und Weise gesteuert werden können. Darüber hinaus ermöglicht es das erfindungsgemäße Verfahren, die elektrische Gesamtleistungsaufnahme der Förderanlage 10 auf einen vordefinierten Grenzwert zu begrenzen. Die elektrische Ausrüstung der Förderanlage 10, beispielsweise Transformatoren, die zwischen ein Versorgernetz und die Förderanlage 10 geschaltet sind, können dadurch präzise auf den vordefinierten Grenzwert der elektrischen Gesamtleistungsaufnahme ausgelegt werden. Eine Überdimensionierung der elektrischen Ausrüstung, insbesondere von Transformatoren, kann dadurch vermieden werden.

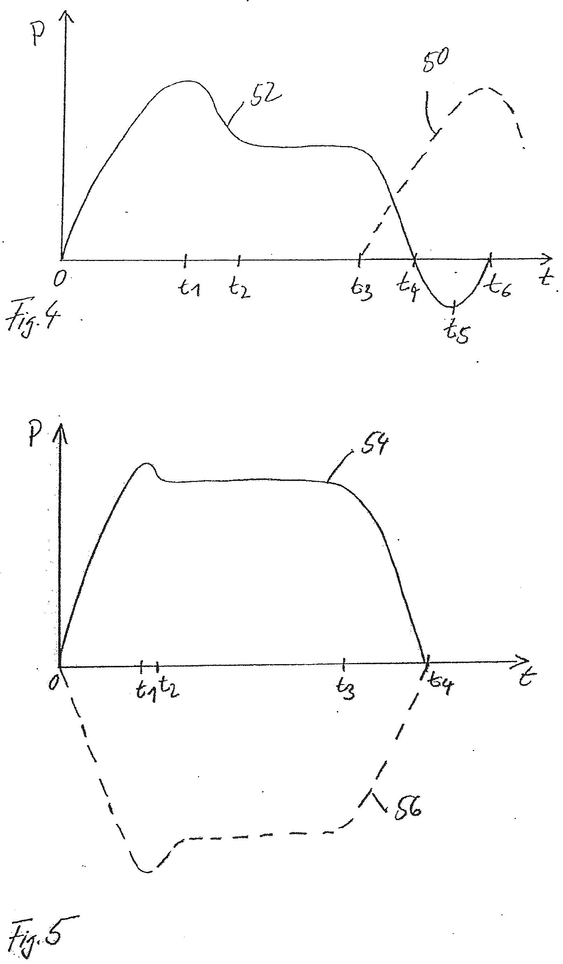

In der Darstellung der Fig. 4 ist schematisch ein Verlauf einer elektrischen Leistungsaufnahme des Fahrgestells eines Regalbediengeräts dargestellt. Das Fahrgestell eines Regalbediengeräts wird mittels eines Elektromotors auf Schienen verfahren, die auf einer horizontalen Bodenoberfläche angeordnet sind. Beim Anfahren des Fahrgestells zum Zeitpunkt t = 0 steigt die aufgenommene elektrische Leistung zunächst stark an, um das Regalbediengerät zu beschleunigen. Zum Zeitpunkt t₁ ist die gewünschte Fahrgeschwindigkeit erreicht und die benötigte elektrische Leistung fällt dann bis zu einem Zeitpunkt t₂ wieder ab. Vom Zeitpunkt t₂ bis t₃ wird das Fahrgestell mit konstanter Geschwindigkeit verfahren, so dass auch die benötigte elektrische Leistung konstant bleibt. Ab dem Zeitpunkt t₃ wird die Leistung des Elektromotors zurückgefahren, so dass auch die aufgenommene elektrische Leistung absinkt und zum Zeitpunkt t₄ bis auf null sinkt. Vom Zeitpunkt t₄ bis zu einem Zeitpunkt t₅ wird das Fahrgestell mittels des Elektromotors stark abgebremst, so dass der Elektromotor als Generator arbeitet und elektrische Leistung in das Netz zurückspeist. Ab dem Zeitpunkt t₅ bis zu einem Zeitpunkt t₆, an dem das Regalbediengerät dann wieder steht, wird die Bremsleistung verringert, so dass sich auch die in das Netz zurückgespeiste elektrische Leistung bis auf null zum Zeitpunkt t₆ verringert.

Die Darstellung der Fig. 5 zeigt den Verlauf der elektrischen Leistungsaufnahme P beim Verfahren eines Lastaufnahmegeräts am Mast des Regalbediengeräts. Die durchgezogene Linie in Fig. 5 zeigt das Verfahren des Lastaufnahmegeräts von unten nach oben. Beim Zeitpunkt t = 0 beginnt die Bewegung des Lastaufnahmegeräts und die Beschleunigung des Lastaufnahmegeräts führt zu einem starken Anstieg der benötigten elektrischen Leistung bis zum Zeitpunkt t₁. Vom Zeitpunkt t₁ bis zum Zeitpunkt t₂ fällt die erforderliche Leistung dann wieder ab, da die Beschleunigung zurückgefahren wird. Vom Zeitpunkt t₂ bis zum Zeitpunkt t₃ wird das Lastaufnahmegerät am Mast des Regalbediengeräts mit konstanter Geschwindigkeit nach oben verfahren. Die hierzu erforderliche Leistung P ist daher zwischen den Zeitpunkten t₂ und t₃ im Wesentlichen konstant. Ab dem Zeitpunkt t₃ wird die Bewegung des Lastaufnahmegeräts dann verlangsamt, bis sie zum Zeitpunkt t₄ vollständig zum Stillstand kommt. Zwischen den Zeitpunkten t₃ und t₄ sinkt die erforderliche elektrische Leistung P daher kontinuierlich bis auf null ab.

Gestrichelt ist in Fig. 5 der Leistungsaufnahmeverlauf beim Verfahren des Lastaufnahmegeräts am Mast des Regalbediengeräts von oben nach unten dargestellt. Beim Verfahren des Lastaufnahmegeräts von oben nach unten muss das Lastaufnahmegerät ständig abgebremst werden, so dass der für das Abbremsen verwendete Elektromotor ständig elektrische Leistung P in das Netz zurückspeisen kann. Im Übrigen ist der gestrichelt dargestellte Verlauf aber im wesentlichen symmetrisch zum durchgezogenen Verlauf, da zwischen den Zeitpunkten t = 0 und t₁ auch beim Abwärtsfahren des Lastaufnahmegeräts zunächst eine Beschleunigung erfolgt, dann zwischen den Zeitpunkten t₂ und t₃ eine Bewegung mit konstanter Geschwindigkeit und zwischen den Zeitpunkten t₃ und t₄ dann ein Bremsvorgang bis zum Stillstand.

Mit dem erfindungsgemäßen Verfahren werden nun die in Fig. 4 und Fig. 5 dargestellten Verläufe der elektrischen Leistungsaufnahme prognostiziert und aus der Summe der einzelnen Leistungsaufnahmeverläufe wird dann eine elektrische Gesamtleistungsaufnahme der Förderanlage berechnet. Um Leistungsspitzen bei der Gesamtleistungsaufnahme innerhalb eines vordefinierten Zeitraums zu vermeiden, werden dann Beförderungsbefehle, die einem speziellen Beförderungsauftrag zugeordnet sind, freigegeben oder verzögert.

Am Beispiel der Fig. 4 ist ein gestrichelter Verlauf 50 abschnittsweise eingezeichnet. Wie zu erkennen ist, wird bei einem Zeitpunkt t₃ begonnen, einen Beförderungsauftrag abzuarbeiten und der prognostizierte Leistungsaufnahmeverlauf, der durch die Kurve 50 dargestellt ist, steigt zum Zeitpunkt t₃ stark an. Würde nun der zu der Kurve 50 gehörende Beförderungsauftrag zum Zeitpunkt t = 0 gestartet, so würden sich die Kurven 52 und 50 überlagern und eine starke Spitze der Leistungsaufnahme P zum Zeitpunkt t₁ wäre die Folge. Mit dem erfindungsgemäßen Verfahren wird der Beförderungsauftrag, zu dem die prognostizierte Leistungsaufnahmekurve 50 gehört, nun verzögert, so dass dieser erst zum Zeitpunkt t₃ startet. Ersichtlich können dadurch die benötigten elektrischen Spitzenleistungen gegenüber dem Fall, in dem beide Beförderungsaufträge, entsprechend den beiden Kurven 50, 52, beim Zeitpunkt t = 0 starten, wesentlich verringert werden.

Mit dem erfindungsgemäßen Verfahren werden nun prognostizierte Verläufe der Leistungsaufnahme für das Ausführen einzelner Beförderungsaufträge, entsprechend den Kurven 50, 52 in Fig. 4 und den Kurven 54, 56 in Fig. 5, so verzögert, verändert oder unmittelbar freigegeben, dass sich die Kurven 50 bis 56 so addieren, dass möglichst wenig ausgeprägte Spitzen in der Leistungsaufnahme verursacht werden. Es wurde bereits erläutert, dass die einzelnen Beförderungsaufträge dabei auch in einzelne Beförderungsabschnitte aufgeteilt werden können, immer mit dem Ziel des Vermeidens von Spitzen beim Verlauf der prognostizierten Gesamtleistungsaufnahme.

Üblicherweise sorgt das erfindungsgemäße Verfahren dafür, dass innerhalb eines vordefinierten Zeitraums, beispielsweise 15 Minuten, ein vorgegebener Grenzwert der elektrischen Gesamtleistungsaufnahme nicht überschritten wird. Dieser vorgegebener Grenzwert kann sich beim Betrieb einer elektrisch angetriebenen Förderanlage durchaus verändern. Wird beispielsweise durch irgendwelche äußeren Umstände innerhalb eines Zeitraums von 15 Minuten der vorgegebene Grenzwert überschritten, so kann das Maß der Überschreitung dann den vorgegebenen Grenzwert für die elektrische Gesamtleistungsaufnahme neu definieren. Denn wenn der Grenzwert einmal überschritten wurde, folgt aus der Abrechnungspraxis der Energieversorgerunternehmen, dass dieser Spitzenwert der elektrischen Gesamtleistungsaufnahme für die Abrechnung des Leistungspreises während eines gesamten Jahres verwendet wird. Aus Kostensicht macht es dann keinen Sinn mehr, die elektrische Gesamtleistungsaufnahme unter einem niedrigeren, vorgegebenen Grenzwert zu halten als den Grenzwert, für den ohnehin der Leistungspreis bezahlt werden muss.

## Patentansprüche

1. Verfahren zum Steuern einer elektrisch angetriebenen Förderanlage (10), wobei die Förderanlage (10) eine Steuerung (30) zum Verarbeiten von Beförderungsaufträgen und zum Erzeugen von Beförderungsbefehlen zum Ausführen der Beförderungsaufträge aufweist, **gekennzeichnet durch** die folgenden Schritte:
- Prognostizieren eines Verlaufs der elektrischen Leistungsaufnahme der Förderanlage (10) für das Ausführen eines Beförderungsauftrags mittels Berechnen einer dem Beförderungsauftrag zugeordneten Fahrkurve und eines der Fahrkurve zugeordneten Verlaufs der Leistungsaufnahme,
- Prüfen, ob ein Verlauf der prognostizierten elektrische Gesamtleistungsaufnahme der Förderanlage (10) beim Ausführen des Beförderungsauftrags einen vordefinierten Grenzwert überschreitet,
- in Abhängigkeit des Prüfungsergebnisses, Freigeben oder Verzögern eines dem Beförderungsauftrag zugeordneten Beförderungsbefehls.

2. Verfahren nach Anspruch 1, **dadurch gekennzeichnet, dass** das Prognostizieren der elektrischen Leistungsaufnahme und das Prüfen, ob eine prognostizierte elektrische Gesamtleistungsaufnahme einen vordefinierten Grenzwert überschreitet, für einen vordefinierten Zeitraum erfolgt.

3. Verfahren nach Anspruch 1 oder 2, **dadurch gekennzeichnet, dass** das Freigeben eines Beförderungsbefehls so erfolgt, dass der Beförderungsauftrag innerhalb des vordefinierten Zeitraums ausgeführt wird und das Verzögern des Beförderungsbefehls so erfolgt, dass der Beförderungsauftrag innerhalb des vordefinierten Zeitraums verschoben oder außerhalb des vordefinierten Zeitraums ausgeführt wird.

4. Verfahren nach wenigstens einem der vorstehenden Ansprüche, **gekennzeichnet durch** Prognostizieren der elektrischen Leistungsaufnahme mehrerer Beförderungsaufträge und Sortieren der Beförderungsaufträge, insbesondere in zeitlicher Hinsicht, so dass ein vordefinierter Grenzwert des Verlaufs der elektrischen Gesamtleistungsaufnahme der Förderanlage (10) nicht überschritten wird.

5. Verfahren nach wenigstens einem der vorstehenden Ansprüche, **gekennzeichnet durch** Verändern eines einem Beförderungsauftrag zugeordneten Beförderungsbefehls hinsichtlich einer Geschwindigkeit der Beförderung, einer Beschleunigung, einer Bremsbeschleunigung und/oder einer Aufteilung in einzelne Beförderungsabschnitte.

6. Verfahren nach Anspruch 5, **dadurch gekennzeichnet, dass** das Verändern des Beförderungsbefehls nach dem Prüfen der prognostizierten elektrischen Gesamtleistungsaufnahme erfolgt und nach dem Verändern eine erneute Prüfung der prognostizierten elektrischen Gesamtleistungsaufnahme erfolgt.

7. Verfahren nach wenigstens einem der vorstehenden Ansprüche, **dadurch gekennzeichnet, dass** sämtliche Beförderungsbefehle für die Förderanlage (10) mittels der Steuerung (30) freigegeben oder verzögert werden.

8. Verfahren nach wenigstens einem der vorstehenden Ansprüche, **gekennzeichnet durch** Berücksichtigen von Randbedingungen, wie eine verfügbare elektrische Leistung in einem jeweiligen Zeitraum, eine elektrische Leistungsaufnahme weiterer elektrischer Geräte im Umfeld der Förderanlage (10) und/oder eine Priorisierung von Beförderungsaufträgen.

9. Verfahren nach wenigstens einem der vorstehenden Ansprüche, **dadurch gekennzeichnet, dass** eine Prognose der elektrischen Gesamtleistungsaufnahme unter Berücksichtigung bereits freigegebener Beförderungsbefehle erfolgt.

10. Verfahren nach Anspruch 9, **dadurch gekennzeichnet, dass** nach Freigabe eines Beförderungsbefehls eine Aktualisierung der Prognose der elektrischen Gesamtleistungsaufnahme erfolgt.

11. Förderanlage zum Durchführen des Verfahrens nach einem der vorstehenden Ansprüche mit einer Steuerung (30) zum Verarbeiten von Beförderungsaufträgen und zum Erzeugen von Beförderungsbefehlen zum Abarbeiten der Beförderungsaufträge, **dadurch gekennzeichnet, dass** die Steuerung (30) Mittel zum Prognostizieren einer elektrischen Leistungsaufnahme der Förderanlage für das Ausführen eines Beförderungsauftrags mittels Berechnen einer dem Beförderungsauftrag zugeordneten Fahrkurve und eines der Fahrkurve zugeordneten Verlaufs der Leistungsaufnahme, Mittel zum Prüfen, ob eine prognostizierte elektrische Gesamtleistungsaufnahme der Förderanlage (10) beim Ausführen des Beförderungsauftrags einen vordefinierten Grenzwert überschreitet, und Mittel zum Freigeben oder Verzögern eines dem Beförderungsauftrag zugeordneten Beförderungsbefehls in Abhängigkeit des Prüfungsergebnisses aufweist

12. Förderanlage nach Anspruch 11, **dadurch gekennzeichnet, dass** die Steuerung (30) Mittel zum Verändern eines einem Beförderungsauftrag zugeordneten Beförderungsbefehls hinsichtlich einer Geschwindigkeit der Beförderung, einer Beschleunigung, einer Bremsbeschleunigung und/oder einer Aufteilung in einzelne Beförderungsabschnitte aufweist.

## Claims

1. Method for controlling an electrically driven conveyor system (10), wherein the conveyor system (10) includes a controller (30) for processing of conveyance orders and for generating conveyance commands for executing the conveyance orders, **characterized by** the following steps:
- predicting a progress of the electrical power consumption of the conveyor system (10) for executing a conveyance order by means of calculating a travel curve assigned to the conveyance order and a progress of the power consumption assigned to the travel curve,
- checking if a progress of the predicted total electrical power consumption of the conveyor system (10) during executing the conveyance order exceeds a predefined limit value,
- in response to the check result, enabling or delaying a conveyance command assigned to the conveyance order.

2. Method according to claim 1, **characterized in that** the predicting of the electrical power consumption and the checking if a predicted total electrical power consumption exceeds a predefined limit value is made for a predefined period of time.

3. Method according to claim 1 or 2, **characterized in that** the enabling of a conveyance command is made such that the conveyance order is executed within the predefined period of time and the delaying of the conveyance command is made such that the conveyance order is postponed within the predefined period of time or is executed outside the predefined period of time.

4. Method according to at least one of the preceding claims, **characterized by** predicting the electrical power consumption of a multitude of conveyance orders and classifying the conveyance orders, in particular with regard to timing, such that a predefined limit value of the progress of the total electrical power consumption of the conveyor system (10) is not exceeded.

5. Method according to at least one of the preceding claims, **characterized by** changing a conveyance command assigned to a conveyance order in terms of speed of conveyance, acceleration, brake acceleration and/or subdivision into individual conveyance sections.

6. Method according to claim 5, **characterized in that** the changing of the conveyance command is made after checking the predicted total electrical power consumption and a further checking of the predicted total electrical power consumption is made after the changing.

7. Method according to at least one of the preceding claims, **characterized in that** all of the conveyance commands for the conveyor system (10) are enabled or delayed by means of the controller (30).

8. Method according to at least one of the preceding claims, **characterized by** considering boundary conditions, like an available electrical power in a respective period of time, an electrical power consumption of further electrical appliances in the environment of the conveyor system (10) and/or a prioritization of conveyance orders.

9. Method according to at least one of the preceding claims, **characterized in that** a prediction of the total electrical power consumption is made in consideration of already enabled conveyance commands.

10. Method according to claim 9, **characterized in that** after enabling a conveyance command an updating of the prediction of the total electrical power consumption is made.

11. Conveyor system for performing the method according to any of the preceding claims, comprising a controller (30) for processing of conveyance orders and for generating conveyance commands for completing the conveyance orders,
**characterized in that**
the controller (30) includes means for predicting an electrical power consumption of the conveyor system for executing a conveyance order by means of calculating a travel curve assigned to the conveyance order and a progress of the power consumption assigned to the travel curve, means for checking if a predicted total electrical power consumption of the conveyor system (10) during executing the conveyance order exceeds a predefined limit value, and means for enabling or delaying a conveyance command assigned to the conveyance order in response to the check result.

12. Conveyor system according to claim 11, **characterized in that** the controller (30) includes means for changing a conveyance command assigned to a conveyance order in terms of speed of conveyance, acceleration, brake acceleration and/or subdivision into individual conveyance sections.

## Revendications

1. Procédé de commande d'une installation de transport électrique (10), dans lequel l'installation de transport (10) présente une commande (30) pour traiter des demandes de transport et pour produire des ordres de transport afin d'exécuter les demandes de transport, **caractérisé par** les étapes suivantes:
- prévoir une allure de la consommation d'énergie électrique de l'installation de transport (10) pour l'exécution d'une demande de transport au moyen du calcul d'une course de déplacement associée à la demande de transport et une allure de la consommation de puissance associée à la courbe de déplacement,
- vérifier si une allure de la consommation de puissance électrique totale prévue de l'installation de transport (10) lors de l'exécution de la demande de transport dépasse une valeur limite prédéfinie,
- en fonction du résultat de la vérification, libérer ou retarder un ordre de transport associé à la demande de transport.

2. Procédé selon la revendication 1, **caractérisé en ce que** l'on effectue la prévision de la consommation de puissance électrique et la vérification pour savoir si une consommation de puissance électrique totale prévue dépasse une valeur limite prédéfinie, pour une période de temps prédéfinie.

3. Procédé selon la revendication 1 ou 2, **caractérisé en ce que** l'on effectue la libération d'un ordre de transport de telle manière que la demande de transport soit exécutée à l'intérieur de la période de temps prédéfinie et on effectue le retardement de l'ordre de transport de telle manière que la demande de transport soit déplacée à l'intérieur de la période de temps prédéfinie ou soit exécutée à l'extérieur de la période de temps prédéfinie.

4. Procédé selon au moins une des revendications précédentes, **caractérisé par** la prévision de la consommation de puissance électrique de plusieurs demandes de transport et la classification des demandes de transport, en particulier au point de vue temporel, de telle manière qu'une valeur limite prédéfinie de l'allure de la consommation de puissance électrique totale de l'installation de transport (10) ne soit pas dépassée.

5. Procédé selon au moins une des revendications précédentes, **caractérisé par** le changement d'un ordre de transport associé à une demande de transport en ce qui concerne une vitesse du transport, une accélération, une accélération de freinage et/ou une division en portions de transport individuelles.

6. Procédé selon la revendication 5, **caractérisé en ce que** l'on effectue le changement de l'ordre de transport après la vérification de la consommation de puissance électrique totale prévue et après le changement on effectue une nouvelle vérification de la consommation de puissance électrique totale prévue.

7. Procédé selon au moins une des revendications précédentes, **caractérisé en ce que** tous les ordres de transport pour l'installation de transport (10) sont libérés ou retardés au moyen de la commande (30).

8. Procédé selon au moins une des revendications précédentes, **caractérisé par** la prise en compte de conditions secondaires, comme une puissance électrique disponible dans une période de temps respective, une consommation de puissance électrique d'autres appareils électriques dans l'environnement de l'installation de transport (10) et/ou une priorisation de demandes de transport.

9. Procédé selon au moins une des revendications précédentes, **caractérisé en ce que** l'on effectue une prévision de la consommation de puissance électrique totale en tenant compte d'ordres de transport déjà libérés.

10. Procédé selon la revendication 9, **caractérisé en ce qu'**après la libération d'un ordre de transport, on effectue une actualisation de la prévision de la consommation de puissance électrique totale.

11. Installation de transport pour la mise en oeuvre du procédé selon l'une quelconque des revendications précédentes, avec une commande (30) pour traiter des demandes de transport et pour produire des ordres de transport afin d'exécuter les demandes de transport,
**caractérisée en ce que**
la commande (30) présente des moyens pour prévoir une consommation de puissance électrique de l'installation de transport pour l'exécution d'une demande de transport au moyen du calcul d'une courbe de déplacement associée à la demande de transport et une allure de la consommation de puissance associée à la courbe de déplacement, des moyens pour vérifier si une consommation de puissance électrique totale prévue de l'installation de transport (10) lors de l'exécution de la demande de transport dépasse une valeur limite prédéfinie, et des moyens pour libérer ou retarder un ordre de transport associé à la demande de transport en fonction du résultat de la vérification.

12. Installation de transport selon la revendication 11, **caractérisée en ce que** la commande (30) présente des moyens pour changer un ordre de transport associé à une demande de transport en ce qui concerne une vitesse du transport, une accélération, une accélération de freinage et/ou une division en portions de transport individuelles.
